# EUROPEAN PATENT SPECIFICATION

(11) **EP 4 398 631 B1**
(45) Date of publication and mention of the grant of the patent: **08.07.2026**
(21) Application number: 23150491.1
(22) Date of filing: 05.01.2023
(51) Int. Cl.: H04W 28/24, H04W 24/02, H04W 28/08, H04W 40/20

(54) **TECHNIQUES FOR EVALUATING ANSWERS ARE PROVIDING QOS PARAMETERS FOR A MOBILE RADIO-CAPABLE USER DEVICE**
VERFAHREN ZUR BEURTEILUNG VON ANTWORTEN ZUR BEREITSTELLUNG VON QOS-PARAMETERN FÜR EINE MOBILFUNKFÄHIGE BENUTZERVORRICHTUNG
TECHNIQUES D'ÉVALUATION DE RÉPONSES POUR FOURNIR DES PARAMÈTRES DE QUALITÉ DE SERVICE (QOS) POUR UN DISPOSITIF UTILISATEUR POUVANT FONCTIONNER EN RADIO MOBILE

(43) Date of publication of application: 10.07.2024
(73) Proprietor: Deutsche Telekom AG, 53113 Bonn (DE)
(72) Inventor: Aleksiev, Vasil, 2200 Wien (AT)
(74) Representative: karo IP

(56) References cited:
- US-A1- 2021 185 601
- HUAWEI ET AL: "Potential QoS change notification to assist Application Adjustment", vol. SA WG2, no. Reno, NV, USA; 20190513 - 20190517, 7 May 2019 (2019-05-07), XP051735911, Retrieved from the Internet <URL:http://www.3gpp.org/ftp/Meetings%5F3GPP%5FSYNC/SA2/Docs/S2%2D1905725%2Ezip> [retrieved on 20190507]
- "3rd Generation Partnership Project; Technical Specification Group Services and System Aspects; Study of Enablers for Network Automation for the 5G System (5GS); Phase 3 (Release 18)", no. V18.0.0, 21 December 2022 (2022-12-21), pages 1 - 278, XP052234765, Retrieved from the Internet <URL:https://ftp.3gpp.org/Specs/archive/23_series/23.700-81/23700-81-i00.zip 23700-81-i00.docx> [retrieved on 20221221]

## Description

The invention relates to a method, a radio communication system, a QoS allocation means and a computer program for evaluating and/or providing QoS parameters for a mobile radio-capable user device, a UAV (uncrewed aerial vehicle), that exchanges data with a radio communication network. The radio communication network can be a 3GPP system

3GPP SA6 has finalized a TR 23.700-99, which is a technical report capturing a study on application architecture aspects solutions and enhancements to SEAL for enabling network slice capability exposure.

The study identifies the architectural requirements and application architecture to support a network slice capability exposure. Topics cover: an enhancement of network slice capability management, lifecycle management of application layer exposed network slices, discovery & registration aspects for management service exposure, network slice fault management capability, communication service management exposure, application layer QoS verification capability enablement, network slice related performance and analytics exposure, support for requirements translation, support for trust enablement, support for managing trusted third-party owned application(s), dynamic slice SLA alignment, network slice capability exposure in the edge data network. Further technical background information of the invention can be found in TS23.435 V0.4.0 (2022-11), which is hereby fully included into this text.

HUAWEI ET AL: "Potential QoS change notification to assist Application Adjustment", 3GPP DRAFT: S2-1905725 TS 23287 SOL29 OF 23786 V2X GENERIC PART, 3RD GENERATION PARTNERSHIP PROJECT (3GPP), MOBILE COMPETENCE CENTRE: 650, ROUTE DES LUCIOLES, F-06921 SOPHIA-ANTIPOLIS CEDEX, FRANCE SA WG2, Reno, NV, USA; 20190513 - 20190517, 7 May 2019 (2019-05-07), XP051735911, Retrieved from the Internet:
URL:http://www.3gpp.org/ftp/Meetings_3GPP SYNC/SA2/Docs/2D1905725. zip [Retrieved on 2019-05-07] teaches that an application running on a UAV or the route that the UAV is traveling can have its QoS adjusted if requirements along this road are not being met.

There is already a technical way regarding how an application function (AF) can provide a policy towards a NSCE server - e.g. when a maximum number of PDU sessions/UEs is reached - to modify the slice parameters by pre-defined steps. If certain time period (summer) is reached - slice resources could be decreased or increased.

There are use cases in which mobile radio-capable user devices must travel over fixed routes and wherein it is necessary to guarantee predefined QoS values to the mobile radio-capable user device in order to enable C2 (command and control) communication. For example, if a UAV (uncrewed aerial vehicle) like a drone flies through a certain region, it is important that flight control, for example remote flight control, is not being interrupted. There are certain applications which have to transfer certain amounts of data among a specific route - for example UAVs which are having a several tens of kilometers route among petrol pipes for visual inspection. Such UAVs need to have certain guaranteed QoS among that route for being able to transfer the data from the cameras and for C2 communication (command and control).

However, the ability to dynamically modify slice resources is not sufficient for all use cases.

Hence, it is the task to provide techniques to enable a more flexible solution to modify slice resources.

This object is solved by the features of the independent claims.

The invention discloses a method of evaluating and/or providing QoS parameters for a mobile radio-capable user device namely a UAV, which exchanges data with a radio communication network. In particular, the UAV receives control signals by means of a radio communication network. The method comprising the following steps:
- Requesting a radio supported route for the UAV to the radio communication network, wherein the route request comprises geographical information as waypoints, of the route and corresponding QoS requirements of each of the waypoints;
   o the route is requested as a policy of the UAV comprising geographical information with the corresponding QoS requirements; in principle such policies are already existing but currently they lack the geographical information;
   ∘ the route is being a radio supported route because the UAV receives radio signals from the radio communication network along that route. By exchanging radio signals with the radio communication network it is possible to remotely operate the UAV and/or to enable autonomously traveling functionalities of the UAV. For that purpose, the UAV is equipped with transceivers to communicate with the radio network;
   ∘ the concept of waypoints is already defined in RAN TR36.777. A waypoint is a point where the UAV can be at a specific time, a list of waypoints, preferably together with time, defines the route; in an embodiment the waypoints of route are fixed; fixed waypoints mean that the UAV must expect to travel along these waypoints without deviation by using another waypoint instead;
   ∘ the UAV is a drone or a V2X (Vehicle-to-everything) car or the like;
   ∘ Vehicle-to-everything (V2X) is communication between a vehicle and any entity that may affect, or may be affected by, the vehicle. It is a vehicular communication system that incorporates other more specific types of communication as V2I (vehicle-to-infrastructure), V2N (vehicle-to-network), V2V (vehicle-to-vehicle), V2P (vehicle-to-pedestrian), V2D (vehicle-to-device). The main motivations for V2X are road safety, traffic efficiency, energy savings, and mass surveillance. There are two types of V2X communication technology depending on the underlying technology being used: WLAN-based, and/or cellular-based (like 5G);
- Providing and/or reserving QoS capacities of the radio network according to the QoS requirements of the route, in particular for each of the waypoints, for the mobile radio-capable user device by a QoS allocation means, in particular the QoS allocation means are being realized as OAM (e.g. MnS) functions that change the QoS parameters of a corresponding network slice.
   ∘ the QoS allocation means can be realized as being network functions implemented within the radio communication network, in particular within the 5G network, that change the QoS parameters of a corresponding network slice;
   ∘ the 5G network comprises several network slices, wherein each of the network slices can be configured, in particular by using appropriate network functions, to provide the communication with certain QoS capacities for the mobile radio-capable user device or User Equipment and for the core network. If QoS capacities are changed it follows that the parameters of the network slice that provides this QoS capacities is changed, too. For the communication with the radio network, the UAV can typically choose between subscribed existing multiple slices and/or slices been configured according to the QoS requirements of the radio-capable user device; in a 5G environment, along with route UAV is being attached to a subscribed network slice to provide communication;
   ∘ if the QoS capacities of each of the waypoints (already) matches the QoS requirements, then it can be sufficient that the QoS capacities are being reserved for the UAV to provide C2 communication and exchange data with required QoS parameters; the reservation ensures that the UAV has access to the required QoS parameters; in this sense the "reservation" means that the appropriate slice resources can only be used by the mobile radio-capable user device and are being blocked for any other device at least for a certain period of time; reservation can also be done as follows (typically it is currently done this way): reservation is done for the slice itself. Slice resources can be reserved for the respective UEs subscribed to this slice and are not available for other slices;
   ∘ if the QoS capacities of at least one of the waypoints does not yet match the QoS requirements, then at least for that waypoint the QoS allocation means needs to take measures in order to increase the QoS capacity and to provide the corresponding slice QoS capacities along the route - in those cases, the respective slice is being modified; in case of a 5G radio network, there are existing routines that can be triggered to increase the capacity of a network slice that is responsible for that waypoint and to which the mobile radio-capable user device is being attached;
   ∘ in case of a 5G radio network, the QoS allocation means can be the NSCE server, wherein the NSCE server provided with an appropriate AF policy that specifies the QoS requirements for the waypoints of the route;
   ∘ there can be multiple slices being available and parallel coexistence may not be properly configured or there could be unused resources, not allocated to any slice. Specifically, the NSCE server can take specific requests and modify existing slice, serving the respective radio-capable user device in order to ensure there are enough resources to serve specific QoS requirements along the route where the radio-capable user device flies trough. Preferably, unused resources of the radio network are used to increase the capacity of the network slice the UAV is being attached to.

And checking by a QoS verification means of the radio network if the QoS capacities of the waypoints meet the corresponding QoS requirements.

Hence, this enables modification of the slice parameters based on location information. This provides the advantage that the UAV can be provided with the required QoS parameters along the route. This is important if those required QoS are necessary to enable a safe remote and/or autonomous traveling of the radio-cable user device, especially in cases when the road is fixed and there is no possibility that the radio-cable user device gets to its destination point by using other waypoints. This is an important prerequisite to enable self-driving and/or remote driving functionalities in the future within communication networks.

In an embodiment, the route request comprises time information about the route, in particular time points specifying when the UAV reaches the respective waypoint.

This provides the advantage that the QoS capacities of the respective slice including radio network and core network can be adjusted more appropriately with respect to time. Additionally, it is possible that it can be checked for the appropriate time points, if the required QoS values are being provided for the individual waypoints along the route. The time information enables the radio network that comprises the core network to provide the QoS requirements only at the specified time points, in particular for predefined time windows, that actually match to the time points the UAV actually uses the QoS capacities.

In an embodiment, the route request comprises priority information. If there are high priority UEs, they can be handled in a high priority slice. Priority seems to be predefined with the subscription information as some UEs can be subscribed to high priority slices.

This provides the advantage that the QoS allocation means can decide based on this priority information if the QoS capacities of the network slice shall be increased or if there are other requests from other use cases, even from another UAV, that has a higher priority. If two use cases are competing regarding the same resources, the one with a higher priority is being preferred.

In an embodiment, the route request comprises different QoS requirements of at least two of the waypoints. This can be stated that different QoS requirements can be requested for different regions. There can be waypoints along the route of the UAV that need lower QoS requirements than other waypoints. For example, if a drone shall inspect an infrastructure by providing video records of that infrastructure there might be regions where such a video records is not necessary or where it is possible to record the video with lower quality.

This provides the advantage that the radio communication network can be used more efficiently because there is no need to modify slices that provide QoS capacities if those QoS capacities are higher than the QoS requirements of that specific waypoint even if the QoS requirements of other waypoints are higher.

In an embodiment, the route request comprises ID information of the UAV, i.e. the user equipment.

This provides the advantage that it can be ensured that the QoS capacities are only reserved and/or provided for the UAV/user equipment for which the request was submitted. The request can be submitted by the entity that controls the flights/owns the drones.

In an embodiment, the request is submitted by the UAV, in particular a V2X or UAV, a UAE layer and/or an UTM.

This provides the advantage of a very flexible way to submit the request. In particular, it is very flexible in a way that the requests can be submitted by the entity that creates the route with the fixed waypoints.

As claimed, a verification means of the radio network checks if the QoS capacities of the waypoints meet the corresponding QoS requirements. Preferably, this step is being executed before modifying the slice parameters by using the allocation means. However, it is possible that the allocation means provides the required QoS capacities without this additional checking step. In an embodiment, the verification means is the NSCE server with appropriate algorithm.

This provides the advantage that it can be more efficient in terms of network resources to first check if QoS requirements along the route are matched before modifying the specific part of that slice containing the waypoint in question.

In an embodiment, signaling means of the radio network send a route confirmation signal, in particular the route confirmation signal is received by the mobile radio-capable user device, the UAE layer and/or the UTM.

This provides the advantage that knowledge is being provided that the QoS capacities along the route are being fulfilled so that the mobile radio-capable user device can start its route.

An embodiment, the route confirmation signal comprises starting time and/or speed information.

This provides the advantage that the time points when the UAV actually uses the network resources corresponding to the waypoint can be changed. This provides a more efficient usage of network resources. For example, it might be the case that during daytime at least one of the waypoints does not provide the required QoS values, whereas during nighttime all of the waypoints provide the required QoS values. For such a case, the confirmation signal can comprise the starting time that lies during nighttime.

In an embodiment, by QoS allocation means releases the QoS capacities of the UAV after the route is finished and/or after a pre-defined time period.

This provides the advantage, that the network resources can efficiently be reused for other use cases after they are no longer needed to serve the UAV.

According to a second aspect of the invention, a QoS allocation means of a radio communication network configured to perform the steps of the method described above is being provided.

In particular, the QoS allocation means is configured
- to receive a request regarding a radio supported route for a mobile radio-capable user device used as UAV of the radio network, wherein the route request comprises waypoints of the route and corresponding QoS requirements of each of the waypoints;
- to provide and/or to reserve QoS capacities of the radio network according to the QoS requirements of each of the waypoints for the UAV.

The QoS allocation means provides the advantages that were described above in the context of the inventive method.

According to a fourth aspect of the invention a radio communication network is disclosed. The radio communication network is configured to perform the steps of the method described above. For that purpose, the radio communication network can comprise appropriate communication links, communication interfaces, data network, databases, servers and/or radio access networks (RAN), wherein the RAN comprises base stations that provide radio access to the various waypoints.

In an embodiment, the radio communication network is a 5G communication network are a network of the later communication standard like 6G. A 5G communication network is especially suited for the invention because it is possible to modify the resources of the network slices. The 5G network is designed in order to enable dynamic qualification of the slices in order to match QoS requirements of certain use cases, in this example of the mobile radio-capable device, like a UAV or any other kind of radio-capable vehicle that requires certain QoS values.

The radio communication network provides the advantages that were described above in the context of the inventive method.

According to a fifth aspect of the invention, a computer program comprising instructions which, when the program is executed by a computer, performs the steps of the method described above.

In the following, preferred implementation examples of the present invention are explained with reference to the accompanying figure:
- Fig. 1:: shows a AF policy provisioning;
- Fig. 2:: shows a network slice modification based on AF policy;
- Fig. 3:: shows a first exemplary AF policy table;
- Fig. 4:: shows a second exemplary AF policy table;
- Fig. 5:: shows a third exemplary AF policy table;
- Fig. 6:: shows a radio communication system according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

The section of the preferred implementation examples shall begin with definitions:
Network slice capability enablement (NSCE) is a service that enabling the network slice related capabilities towards 3^{rd} party on the basis of R17 SEAL. The NSCE service providing additional functionality and expose slice capabilities based on SA5 MnS services and SA2 service (e.g. NEF APIs, NWDAF APIs, NSACF APIs). This technical specification provides procedures for enabling NSCE service over 3GPP networks while the architecture is defined in TS 23.434. NWDAF is a 5G 3GPP standard method used to collect data from user device, network functions, and operations, administration, and maintenance (OAM) systems, etc. from the 5G Core, Cloud, and Edge networks that can be used for analytics. The NWDAF can be implemented on a server of the 5G radio network; the NWDAF can predict QoS capacities of a respective requested radio cell in a time-resolved manner, in particular based on historical data. OAM is Operation and Maintenance function of 5G system.

Network slice optimization based on AF policy optimizes the network slice for the vertical applications by triggering the network slice modification exposed by EGMF defined in SA5. Network slice optimization based on AF policy procedures are specified in clause 9.5 in TS 23.434.

UAV-C is the Uncrewed Aerial Vehicle Controller. QoS is Quality of Service. UAS is the Uncrewed Aerial System. UTM is the UAS Traffic Management. USS is the UAS Service Supplier. UAS is Uncrewed Aerial System. The UAS application enabler layer shall support one or more UAS applications. The UAS application specific client provides the client side functionalities corresponding to the UAS applications (e.g. Client interacting with USS, UTM). The UAS application specific client utilizes the UAE client for the UAS application layer support functions. The UAS application specific server provides the server side functionalities corresponding to the UAS applications (e.g. USS, UTM, route planning unit). The UAS application specific server utilizes the UAE server for the UAS application layer support functions. The UAE client supports interactions with the UAS application specific client(s). AF is application function. UAE is UAS Application Enabler. VAL is Vertical Application Layer.

The general idea of an embodiment of the invention can be described as follows:
Within a 5G system as a radio communication network, the UAE layer can check by using the NSCE server as a QoS verification means if there are enough resources available in the area/route where a route of a UAV shall be performed, in particular where a UAV flight shall be performed.

The UAE layer can receive the respective flight route in form of waypoints from the UTM optionally together with an estimated time of arrival at the corresponding waypoint.

Upon the UAE layer request towards the NSCE server acting as a QoS allocation means specific resources that yield requested QoS capacities can be created and/or or reserved in certain geographical place/certain service area of the slice by the NSCE server, in particular for specific time periods. Specific resources correspond to Specific QoS values provided by slice to which the UAV is being attached to.

This introduces additional flexibility and enables the provision of respective resources and a reserving of this resources prior the flight of the UAV starts or prior the UAV UE enters specific slice service area. The same principle can be applied for V2X UEs. Where the VAE layer (defined in SA6) can receive specific route from the application function in form of waypoints and can request certain slice capacity to be reserved for the UEs subscribed to that slice via the NSCE server.

In the following, this general ideal of an embodiment of the invention is being disclosed even more detailed.

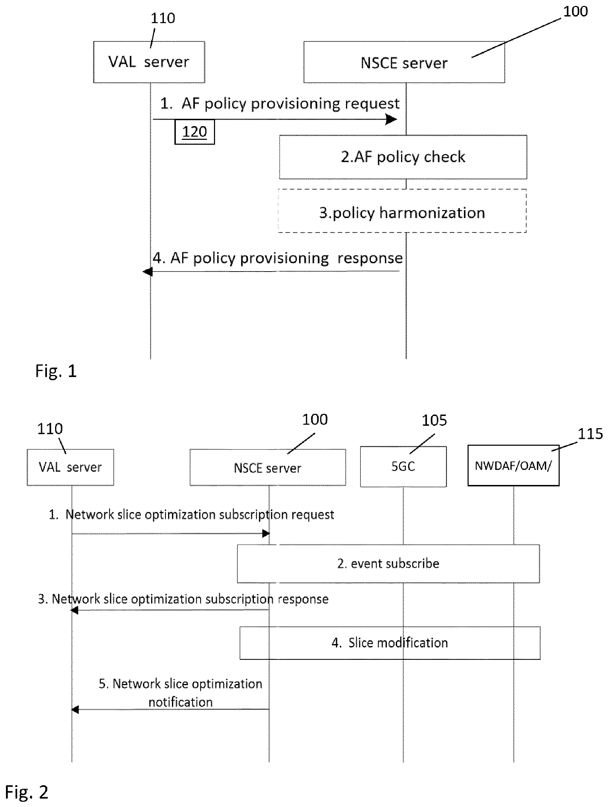

Fig. 1 shows a AF policy provisioning and Fig. 2 shows a network slice modification based on AF policy according to a method of the invention.

The pre-conditions of the inventive method can comprise:
- a NSCE 100 server has information about the existing slice/slice profile/slice services of a 5G network 105 which a VAL server 110 is using;
- the NSCE server 100 is authorized to get network slice management data notification from OAM 115, and/or NWDAF 115;
- the VAL server 110 is authorized to the NSCE server 105 for network slice modification;
- there is enough network capacity when the expected action is to expand the network slice;
- the AF policy has been pre-configured on the VAL server 110;
- the AF policy has been provided to the NSCE server 100;

With respect to Fig. 1 the following steps can be performed:
In step 1 of Fig. 1: The VAL server 110 sends AF policy provisioning request to the NSCE server 100. The request can comprise the policy, VAL server ID and/or S-NSSAI. Optionally, the request contains the indicator of policy harmonization. The AF policy is in form of a policy profile which contains list of trigger events associated with the parameters and expected actions.

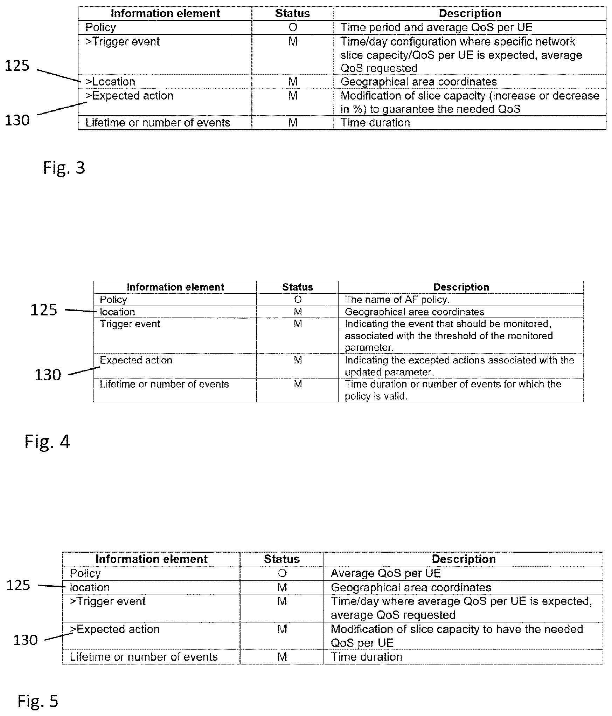

Fig. 3, Fig. 4 and Fig. 5 show possible AF policy tables according to the invention.

All of these AF policy tables show a line with location information 125, wherein a line of expected action 130 can instruct a modification of the capacity of a slice at these locations according to QoS requirements of the UAV 145, for example the UAV 145. The modification can be triggered if the slice does not fulfil the QoS requirements.

The VAL server 110 that provides the policy tables can be realized by the UAV 145, a UAE server 110, a UTM 110 or a USS 110.

Modifications can be done there to cover the possibility that there is a fixed route (list of waypoints, list of geographical areas, time) where specific QoS values are needed. Respectively, this can be valid for different applications, not only in the case of UAV, but to V2X UEs in general. The AF policy can contain the location (list of waypoints, list of geographical areas, time when the UE would be present in the specific point or geographical area) along with required QoS values.

Fig. 3 and Fig. 4 are modifications that introduce this location information into already existing AF policy tables.

The difference between Fig. 3 and Fig. 4 is that in Fig. 4 instead of modifying only one of the policy profiles with adding location, there could be a general modification of the policy profile. In the policy profile only the location can be added. All the policies can have the location as mandatory element, or it could be also optional element. Then the "policy of time period" can be modified to add QoS.

Fig. 5 shows a new policy that can comprise information about average needed QoS per UE, specific location, time:
Having a new policy has the benefits to independently request the respective already existing ones, as they were created without giving the location/smaller part of the slice (slice coverage area). Without using it, specific QoS can be requested for the whole slice, using smaller granularity would help more precise scheduling of resources if needed.

In step 2 of Fig. 1: The NSCE server 100 checks whether the policy is conflict with the service profile and other pre-configured policy. One criterion is to translate the network slice parameters in the service profile to see whether it is conflict with that in the AF provided policy. The NSCE server also checks the validity of the policy (in terms of time, or number of times the event has occurred) to avoid a ping-pong effect of slice modification. If the policy is invalid, the request could be rejected. The NSCE server 100 checks can also check as a QoS verification means of the radio network, in particular of the radio core network, if the QoS capacities of the waypoints meet the corresponding QoS requirements. If this is the case, the QoS capacities are reserved for the UAV 145. If not, slice modification according to Fig. 2 can be started.

In step 3 of Fig. 1: If the policy harmonization is requested, the NSCE server may determine parameters harmonizing the policy if previously authorized.

In step 4 of Fig. 1: the NSCE server 100 sends the AF policy provisioning response to the VAL server 110 to indicate whether the request is successful or not. If it is successful, policy ID is provided to VAL server.

With respect to Fig. 2 the following steps can be performed:
In step 1 of Fig. 2: The VAL server 110 sends network slice modification request as one of the AF policy tables of any of the Fig. 3 to 5 to NSCE server 100. The request can contain the policy ID indicating the different policies.

In step 2 of Fig. 2: The NSCE server translates the trigger event to service API(s) with necessary parameters, and subscribes to the related service if needed. The NSCE server 100 can monitor the 5G network 105 and can subscribe to the NWDAF analytics. To get the monitored performance metric from OAM, the "notifyThresholdCrossing". To monitor the Network Slice load predictions from NWDAF, the NSCE server 100 subscribe to the NWDAF prediction by using the "Nnwdaf_AnalyticsSubscription_Subscribe" or "Nnwdaf_AnalyticsInfo_Request".

In step 3 of Fig. 2: NSCE server sends the network slice optimization subscription response to the VAL server to confirm the subscription of network slice optimization.

In step 4 of Fig. 2: the NSCE server 100 performs the expected action by triggering the slice modification as specified in the AF policy tables. The network slice modification could be triggered by consuming the Network Slice Provisioning service with the "modifyMOIAttributes" operation. The OAM can respond back to NSCE server 100 that the requested slice modification was successful or not. The slice modification requests contain the parameters need to be updated. Since the AF policy tables according to any of the Fig. 3 to 5 comprise location information, the modified QoS capacity of the slice by which the UAV 145 can take the waypoints of the route into account.

In step 5 of Fig. 2: The NSCE server 100 provides a network slice modification notification to the VAL server 110, so that the UAV 145 can start its route.

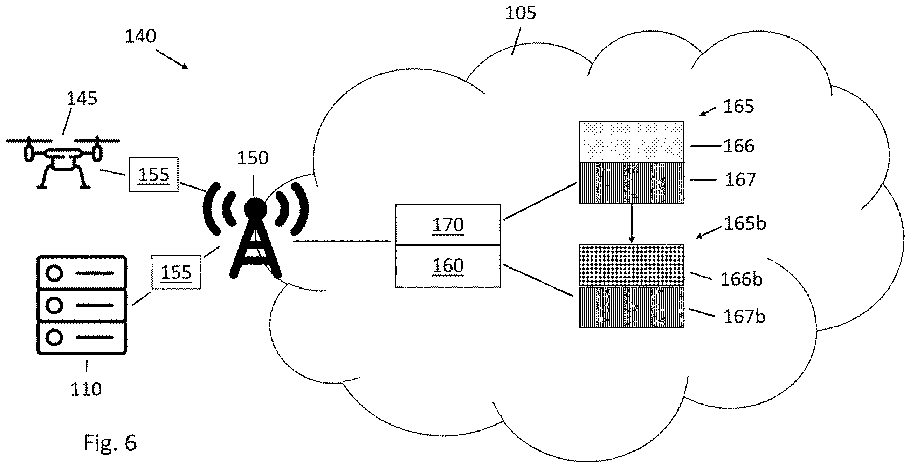

Fig. 6 shows a radio communication system 140 according to the invention. Fig. 6 shows the UAV 145 in the exemplary embodiment of a UAV 145, wherein the UAV 145 exchanges data, in particular video data and command and control data traffic, with the 5G radio network 105 while traveling along its route. At every waypoint along the route, the UAV 145 is being connected to the 5G radio communication network 105 by means of a base station 150.

A UAV-C 145 and/or the VAL server 110 can provide AF policy tables 155 according to any of the figures 3 to 5 to the 5G radio communication network 105 to ensure that the slice to which the UAV 145 is being connected provides QoS capacities according to the requirements of the UAV 145 along its route.

Fig. 6 shows schematically a first slice configuration 165 comprising a first slice 166 with a first QoS capacity and a second slice 167 with a second QoS capacity.

Fig. 6 shows schematically a second slice configuration 165b comprising a first slice 166b with a first QoS capacity and a second slice 167b with a second QoS capacity.

The AF policy tables 155 can be provided to a QoS allocation means 160. The QoS allocation means 160 can be the NSCE server 100. The QoS allocation means 160 can create the first slice 166b according to the second slice configuration 165b, wherein the QoS values of the first slice 166b are created based on the AF policy tables 155. In particular, the QoS values can be generated accordingly for different locations, in particular waypoints, of the 5G communication network 105.

It is also possible that the first slice 166b is being reserved for the UAV 145 so that it can start its route and can be sure that its QoS requirements are fulfilled along the route.

The AF policy tables 155 can be provided to a QoS verification means 170. The QoS verification means 170 can be the NSCE server 100. The QoS verification means 170 of the 5G communication network 105 checks if the QoS capacities of the waypoints meet the corresponding QoS requirements.

If the slice configuration is already configured as the second slice configuration 165b that comprises the first slice 166b that already matches the QoS requirements of the UAV 145, then it is only necessary to resolve the slice as described above for the UAV.

If on the other hand, f the slice configuration is configured as the first slice configuration 165. It can be the case that neither the first slice 166 nor the second slice 167 matches the QoS requirements of the UAV 145. In this case it is possible to modify the first slice 166 or the second slice 167 accordingly based on the AF policy table 155 as described above. In the embodiment the first slice 166 of the first slice configuration is being modified to become the first slice 166b of the second slice configuration.

After this modification, the UAV 145 can start its route, wherein it is ensured that the QoS requirements of the UAV are fulfilled along the route.

## Claims

1. A method of evaluating and/or providing Quality of Service, QoS, parameters for a mobile radio-capable user device (145), an uncrewed aerial vehicle, UAV (145), which exchanges data with a radio communication network (105), comprising the step of
• Requesting a radio supported route as a policy for the mobile radio-capable user device (145) to the radio communication network (105), wherein the route request comprises geographical information (125) as waypoints (125) of the route and corresponding QoS requirements of each of the waypoints,
**characterized by** the steps of:
• Providing QoS capacities of the radio communication network (105) according to the QoS requirements of the route for the mobile radio-capable user device by a QoS allocation means (160) and
• Checking by a QoS verification means of the radio network if the QoS capacities of the waypoints meet the corresponding QoS requirements.

2. The method of claim 1, **characterized in that** the route request comprises time information about the route, in particular time points specifying when the mobile radio-capable user device (145) reaches the respective waypoint.

3. The method of any of the preceding claims, **characterized in that** the route request comprises priority information.

4. The method of any of the preceding claims, **characterized in that** the route request comprises different QoS requirements of at least two of the waypoints.

5. The method of any of the preceding claims, **characterized in that** the route request comprises ID information of the mobile radio-capable user device (145).

6. The method of any of the preceding claims, **characterized in that** the request is submitted by the mobile radio-capable user device (145), an Uncrewed Aerial System, UAS, Application Enabler, UAE, layer, a server acting as an Uncrewed Aerial Vehicle Controller, UAV-C, and/or an UAS Traffic Management, UTM.

7. The method of claim 1, **characterized in that** signaling means of the radio network send a route confirmation signal, in particular the route confirmation signal is received by the mobile radio-capable user device (145), a UAE layer and/or an UTM.

8. The method of claim 7, **characterized in that** the route confirmation signal comprises starting time and/or speed information.

9. The method of any of the preceding claims, **characterized in that** the QoS allocation means releases the QoS capacities of the mobile radio-capable user device after the route is finished and/or after a pre-defined time period.

10. Radio communication network comprising Quality of Service, QoS, allocation means (160) and QoS verification means (170),
whereby the QoS allocation means (160) are configured
- to receive a request regarding a radio supported route for a mobile radio-capable user device used as an uncrewed aerial vehicle, UAV, (145) of the radio network, wherein the route request comprises waypoints of the route and corresponding QoS requirements of each of the waypoints and
**characterized in that** the QoS allocation means (160) are further configured
- to provide and/or to reserve QoS capacities of the radio network according to the QoS requirements of each of the waypoints for the mobile radio-capable user device,
whereby the QoS verification means (170) are configured to perform the checking if the QoS capacities of the waypoints meet the corresponding QoS requirements.

11. The radio communication network of claim 10, wherein the radio communication network is a 5G radio communication network.

12. Quality of Service, QoS, allocation means (160) configured
• to receive a request regarding a radio supported route for a mobile radio-capable user device used as an uncrewed aerial vehicle, UAV, exchanging data with a radio communication network, wherein the route request comprises waypoints of the route and corresponding QoS requirements of each of the waypoints;
• **characterized in that** the means are further configured to provide and/or to reserve QoS capacities of the radio network according to the QoS requirements of each of the waypoints for the mobile radio-capable user device.

13. A computer program comprising instructions which, when the program is executed by a computer, performs the steps of the method of claim 1.

## Patentansprüche

1. Verfahren zur Bewertung und/oder Bereitstellung von Quality-of-Service, QoS, Parametern für ein mobilfunkfähiges Benutzergerät (145), ein unbemanntes Luftfahrzeug, UAV (145), das Daten mit einem Funkkommunikationsnetzwerk (105) austauscht, mit dem Schritt
• Anfordern einer funkgestützten Route als Richtlinie für das mobilfunkfähige Benutzergerät (145) beim Funkkommunikationsnetzwerk (105), wobei die Routenanfrage geografische Informationen (125) als Wegpunkte (125) der Route und entsprechende QoS-Anforderungen für jeden der Wegpunkte umfasst;
**gekennzeichnet durch** die folgenden Schritte:
• Bereitstellen von QoS-Kapazitäten des Funkkommunikationsnetzes (105) entsprechend den QoS-Anforderungen der Route für das mobilfunkfähige Benutzergerät durch eine QoS-Zuweisungseinrichtung (160) und
• Prüfen durch eine QoS-Verifizierungseinrichtung des Funknetzes, ob die QoS-Kapazitäten der Wegpunkte die entsprechenden QoS-Anforderungen erfüllen.

2. Verfahren nach Anspruch 1, **dadurch gekennzeichnet, dass** die Routenanfrage Zeitinformationen über die Route umfasst, insbesondere Zeitpunkte, die angeben, wann das mobilfunkfähige Benutzergerät (145) den jeweiligen Wegpunkt erreicht.

3. Verfahren nach einem der vorhergehenden Ansprüche, **dadurch gekennzeichnet, dass** die Routenanfrage Prioritätsinformationen umfasst.

4. Verfahren nach einem der vorhergehenden Ansprüche, **dadurch gekennzeichnet, dass** die Routenanfrage unterschiedliche QoS-Anforderungen von mindestens zwei der Wegpunkte umfasst.

5. Verfahren nach einem der vorhergehenden Ansprüche, **dadurch gekennzeichnet, dass** die Routenanfrage ID-Informationen des mobilfunkfähigen Benutzergeräts (145) umfasst.

6. Verfahren nach einem der vorhergehenden Ansprüche, **dadurch gekennzeichnet, dass** die Anfrage von dem mobilfunkfähigen Benutzergerät (145), einem unbemannten Luftfahrtsystem, UAS, einer UAS-Application-Enabler-(UAE)-Schicht, einem Server, der als Uncrewed-Aerial-Vehicle-Controller (UAV-C) agiert, und/oder einem UAS-Verkehrsmanagement, UTM, übermittelt wird.

7. Verfahren nach Anspruch 1, **dadurch gekennzeichnet, dass** Signalisierungseinrichtungen des Funkkommunikationsnetzwerks ein Routenbestätigungssignal senden, insbesondere wird das Routenbestätigungssignal von dem mobilfunkfähigen Benutzergerät (145), einer UAE-Schicht und/oder einem UAS-Verkehrsmanagement, UTM, empfangen.

8. Verfahren nach Anspruch 7, **dadurch gekennzeichnet, dass** das Routenbestätigungssignal Startzeit- und/oder Geschwindigkeitsinformationen umfasst.

9. Verfahren nach einem der vorhergehenden Ansprüche, **dadurch gekennzeichnet, dass** die QoS-Zuweisungseinrichtung die QoS-Kapazitäten des mobilfunkfähigen Benutzergeräts freigibt, nachdem die Route beendet ist und/oder nach einem vordefinierten Zeitraum.

10. Funkkommunikationsnetzwerk, umfassend Quality-of-Service-, QoS-, Zuweisungseinrichtungen (160) und QoS-Verifizierungseinrichtungen (170), wobei die QoS-Zuweisungseinrichtungen (160) dazu eingerichtet sind,
• eine Anfrage bezüglich einer funkgestützten Route für ein als unbemanntes Luftfahrzeug, UAV, (145) verwendetes mobilfunkfähiges Benutzergerät des Funknetzwerks zu empfangen, wobei die Routenanfrage Wegpunkte der Route und entsprechende QoS-Anforderungen jedes der Wegpunkte umfasst, und
**dadurch gekennzeichnet, dass** die QoS-Zuweisungseinrichtungen (160) ferner dazu eingerichtet sind,
• QoS-Kapazitäten des Funknetzwerks entsprechend den QoS-Anforderungen jedes der Wegpunkte für das mobilfunkfähige Benutzergerät bereitzustellen und/oder zu reservieren,
wobei die QoS-Verifizierungseinrichtungen (170) dazu eingerichtet sind, die Prüfung durchzuführen, ob die QoS-Kapazitäten der Wegpunkte die entsprechenden QoS-Anforderungen erfüllen.

11. Funkkommunikationsnetzwerk nach Anspruch 10, wobei das Funkkommunikationsnetzwerk ein 5G-Funkkommunikationsnetzwerk ist.

12. Quality-of-Service-, QoS-, Zuweisungseinrichtung (160), die dazu eingerichtet ist,
• eine Anfrage bezüglich einer funkgestützten Route für ein mobilfunkfähiges Benutzergerät, das als unbemanntes Luftfahrzeug, UAV, verwendet wird und Daten mit einem Funkkommunikationsnetzwerk austauscht, zu empfangen, wobei die Routenanfrage Wegpunkte der Route und entsprechende QoS-Anforderungen jedes der Wegpunkte umfasst;
• **dadurch gekennzeichnet, dass** die Einrichtung ferner dazu eingerichtet ist, QoS-Kapazitäten des Funknetzwerks entsprechend den QoS-Anforderungen jedes der Wegpunkte für das mobilfunkfähige Benutzergerät bereitzustellen und/oder zu reservieren.

13. Computerprogramm, umfassend Anweisungen, die, wenn das Programm von einem Computer ausgeführt wird, die Schritte des Verfahrens nach Anspruch 1 ausführen.

## Revendications

1. Procédé d'évaluation et/ou de fourniture de paramètres de qualité de service, QoS, pour un dispositif (145) d'utilisateur apte à la radiocommunication mobile, un véhicule aérien sans équipage, UAV (145), qui échange des données avec un réseau (105) de radiocommunication, comprenant l'étape consistant à
• Demander un itinéraire pris en charge par radio en tant que politique pour le dispositif (145) d'utilisateur apte à la radiocommunication mobile au réseau (105) de radiocommunication, la demande d'itinéraire comprenant des informations géographiques (125) en tant que points (125) de cheminement de l'itinéraire et des exigences de QoS correspondantes de chacun des points de cheminement ;
**caractérisé par** les étapes consistant à :
• Fournir des capacités de QoS du réseau (105) de radiocommunication en fonction des exigences de QoS de l'itinéraire pour le dispositif d'utilisateur apte à la radiocommunication mobile par un moyen (160) d'attribution de QoS et
• Faire contrôler, par un moyen de vérification de QoS du réseau radio, si les capacités de QoS des points de cheminement répondent aux exigences de QoS correspondantes.

2. Procédé selon la revendication 1, **caractérisé en ce que** la demande d'itinéraire comprend des informations temporelles concernant l'itinéraire, en particulier des instants spécifiant quand le dispositif (145) d'utilisateur apte à la radiocommunication mobile atteint le point de cheminement respectif.

3. Procédé selon l'une quelconque des revendications précédentes, **caractérisé en ce que** la demande d'itinéraire comprend des informations de priorité.

4. Procédé selon l'une quelconque des revendications précédentes, **caractérisé en ce que** la demande d'itinéraire comprend des exigences de QoS différentes d'au moins deux des points de cheminement.

5. Procédé selon l'une quelconque des revendications précédentes, **caractérisé en ce que** la demande d'itinéraire comprend des informations d'identification du dispositif (145) d'utilisateur apte à la radiocommunication mobile.

6. Procédé selon l'une quelconque des revendications précédentes, **caractérisé en ce que** la demande est déposée par le dispositif (145) d'utilisateur apte à la radiocommunication mobile, une couche de facilitation d'application, UAE, de système aérien sans équipage, UAS, un serveur agissant comme contrôleur de véhicule aérien sans équipage, UAV-C, et/ou une gestion de trafic d'UAS, UTM.

7. Procédé selon la revendication 1, **caractérisé en ce que** des moyens de signalisation du réseau radio envoient un signal de confirmation d'itinéraire, en particulier le signal de confirmation d'itinéraire étant reçu par le dispositif (145) d'utilisateur apte à la radiocommunication mobile, une couche UAE et/ou une UTM.

8. Procédé selon la revendication 7, **caractérisé en ce que** le signal de confirmation d'itinéraire comprend des informations de temps de démarrage et/ou de vitesse.

9. Procédé selon l'une quelconque des revendications précédentes, **caractérisé en ce que** le moyen d'attribution de QoS libère les capacités de QoS du dispositif d'utilisateur apte à la radiocommunication mobile après que l'itinéraire est terminé et/ou après un laps de temps prédéfini.

10. Réseau de radiocommunication comprenant des moyens (160) d'attribution de qualité de service, QoS, et des moyens (170) de vérification de QoS,
les moyens (160) d'attribution de QoS étant configurés
- pour recevoir une demande concernant un itinéraire pris en charge par radio pour un dispositif d'utilisateur apte à la radiocommunication mobile utilisé comme véhicule aérien sans équipage, UAV, (145) du réseau radio, la demande d'itinéraire comprenant des points de cheminement de l'itinéraire et des exigences correspondantes de QoS de chacun des points de cheminement et
**caractérisé en ce que** les moyens (160) d'attribution de QoS sont en outre configurés
- pour fournir et/ou réserver des capacités de QoS du réseau radio selon les exigences de QoS de chacun des points de cheminement pour le dispositif d'utilisateur apte à la radiocommunication mobile,
les moyens (170) de vérification de QoS étant configurés pour vérifier si les capacités de QoS des points de cheminement répondent aux exigences de QoS correspondantes.

11. Réseau de radiocommunication selon la revendication 10, le réseau de radiocommunication étant un réseau de radiocommunication 5G.

12. Moyens (160) d'attribution de qualité de service, QoS, configurés
• pour recevoir une demande concernant un itinéraire pris en charge par radio pour un dispositif d'utilisateur apte à la radiocommunication mobile utilisé comme véhicule aérien sans équipage, UAV, échangeant des données avec un réseau de communication radio, la demande d'itinéraire comprenant des points de cheminement de l'itinéraire et des exigences correspondantes de QoS de chacun des points de cheminement ;
• **caractérisé en ce que** les moyens sont en outre configurés pour fournir et/ou réserver des capacités de QoS du réseau radio selon les exigences de QoS de chacun des points de cheminement pour le dispositif d'utilisateur apte à la radiocommunication mobile.

13. Programme d'ordinateur, comprenant des instructions qui, lorsque le programme est exécuté par un ordinateur, réalisent les étapes du procédé selon la revendication 1.
